# EUROPEAN PATENT APPLICATION

(11) **EP 4 741 263 A1**
(43) Date of publication of application: **13.05.2026**
(21) Application number: 24851411.9
(22) Date of filing: 19.06.2024
(51) Int. Cl.: B62D 25/20

(54) **VEHICLE BODY LOWER STRUCTURE FOR ELECTRIC VEHICLE**

(30) Priority: 08.08.2023 JP 2023128952
(71) Applicant: JFE Steel Corporation, Tokyo, 100-0011 (JP)
(72) Inventor: SAITO, Takanobu, Tokyo 100-0011 (JP)
(74) Representative: Hoffmann Eitle
(86) International application number: PCT/JP2024/022140
(87) International publication number: WO 2025/032978

(57) **Abstract**

An underbody structure for a battery electric vehicle according to the present invention includes: a pair of left and right side sills 10; a battery pack 20 disposed between the side sills 10; a floor cross member 30 having a groove shape extending linearly in a vehicle width direction; and a ground-side cross member 40 having a groove shape extending in the vehicle width direction, in which the side sills 10 each include a side sill inner 11 having a hat cross section and a side sill outer 13 having a groove shape. A side portion 11a of the side sill inner 11 and a surface portion 30a provided at an end of the floor cross member 30 in the vehicle width direction have substantially the same cross section orthogonal to a vehicle front-rear direction, and the side sill inner 11 is disposed such that ridge line sections 11b in a vehicle vertical direction overlap an upper end edge and a lower end edge of the surface portion 30a of the floor cross member 30.

## Description

### Field

The present invention relates to an underbody structure of a battery electric vehicle in which a battery pack is disposed on the main floor of the underbody.

### Background

In recent years, particularly in the automobile industry, replacement from internal combustion engine vehicles to battery electric vehicles or the like is progressing due to environmental issues. In battery electric vehicles or the like, a battery pack accommodating a large battery (battery) is disposed on the main floor of an underbody. In addition, Li-based materials are often used for the battery, and there is a risk of fire if the battery pack is damaged at the time of collision and liquid leakage from the battery occurs. Therefore, a structure for protecting the battery pack is required.

In general, a battery electric vehicle or the like has a structure in which the battery pack is surrounded by a pair of left and right side sills disposed on both sides of a vehicle body and a floor cross member provided above the battery pack and connected to the left and right side sills. At the time of side collision (side impact), it is important that a side sill or the like is deformed by a collision load input to a side surface of the vehicle to absorb the collision energy (impact energy), thereby reducing the transfer load on the battery pack and suppressing the deformation. Therefore, for example, as disclosed in Patent Literatures 1 to 7, structures for protecting a battery pack at the time of side collision are proposed so far.

### Citation List

### Patent Literatures

Patent Literature 1: JP 2020-83033 A
Patent Literature 2: Japanese Patent No. 6889419
Patent Literature 3: JP 2020-189567 A
Patent Literature 4: JP 2021-88364 A
Patent Literature 5: JP 2022-77194 A
Patent Literature 6: Japanese Patent No. 6734709
Patent Literature 7: Japanese Patent No. 6887469

### Summary

### Technical Problem

In the structures of Patent Literatures 1 to 3, a flange portion, formed at an end portion of a floor cross member (cross member in Patent Literature 2, and first and second cross members in Patent Literature 3) having a hat-shaped cross section, is connected to a side surface of a side sill (locker in Patent Literature 1). However, in these structures, deformation in which a floor cross member having the hat-shaped cross section is opened is likely to occur due to a collision load input at the time of side collision, and thus, collision energy cannot be sufficiently absorbed.

Meanwhile, the structure of Patent Literature 4 includes a side sill (locker in Patent Literature 4) in which an outer portion and an inner portion are integrally molded, and the inner portion has an L-shaped deformed shape in cross section cut in a vehicle width direction. Therefore, it is difficult to manufacture the side sill having such a cross section by press forming, and there are problems of a decrease in the productivity and an increase in the manufacturing cost. In addition, in the structure of Patent Literature 4, a ladder shape impact absorption part (impact energy absorbing member) integrally formed in a side sill is provided in order to absorb collision energy input at the time of side collision; however, this leads to an increase in the weight of the vehicle body.

Furthermore, in the structures of Patent Literatures 5 to 7, the end portion of the floor cross member is positioned above the side sill. Therefore, the side sill cannot be sufficiently crushed by the reaction force of a collision load transmitted to the floor cross member at the time of side collision, and the collision energy cannot be sufficiently absorbed. Furthermore, in the structures of Patent Literatures 5 to 7, since the floor cross member is partially in contact with the upper portion of the side sill or a part of a punch bottom, the side sill cannot be completely crushed at the time of side collision, and the absorption efficiency of collision energy is low.

As described above, the conventional structures that protect the battery pack at the time of side collision cannot sufficiently absorb collision energy, and thus, there is a problem that the transfer load on the battery pack cannot be reduced to suppress deformation. Furthermore, in order to sufficiently absorb the collision energy, it is necessary to separately provide an impact absorption part (impact energy absorbing member), whereby the weight of the vehicle body increases.

The present invention has been made to solve the above problems, and an object of the present invention is to provide an underbody structure of a battery electric vehicle capable of reducing a transfer load on a battery pack and suppressing deformation at the time of side collision of the battery electric vehicle without reducing weight efficiency.

### Solution to Problem

To solve the problem and achieve the object, an underbody structure for a battery electric vehicle according to the present invention includes: a pair of left and right side sills disposed on the vehicle outer side in the vehicle width direction and extending in a vehicle front-rear direction; a battery pack disposed between the pair of left and right side sills; a floor cross member installed on a top surface side of the battery pack and extending in a vehicle width direction; and a ground-side cross member installed on a lower side of the battery pack and having a groove shape extending in a vehicle width direction, wherein the side sills each include: a side sill inner having a hat cross section opened toward the vehicle exterior side in the vehicle width direction, the side sill inner includes a side portion positioned on a vehicle interior side in the vehicle width direction, slope sections each continuous from one of an upper end edge and a lower end edge of the side portion to a vehicle exterior side via a ridge line section and inclined with respect to a vehicle horizontal direction, and a flange portion continuous from each of the slope sections; and a side sill outer having a groove shape opened toward the vehicle interior side in the vehicle width direction, the side sill outer includes a bottom part positioned on the vehicle exterior side in the vehicle width direction, and wall parts each bent from one of an upper end edge and a lower end edge of the bottom part toward the vehicle interior side and continuous, the flange portion of the side sill inner on an upper side of a vehicle body and an upper end portion of the side sill outer are joined to each other in a state in which an opening side of the side sill inner and an opening side of the side sill outer face each other, and the flange portion of the side sill inner on a lower side of the vehicle body and the bottom part of the side sill outer or the wall part of the side sill outer on the lower side of the vehicle body are joined to each other in the state in which the opening side of the side sill inner and the opening side of the side sill outer face each other, the floor cross member has a linear groove shape opened toward the lower side of the vehicle body and closed with surface portions provided at both ends in the vehicle width direction, each of the surface portions abutting on the side portion of one of the left and right side sill inners, the side portion of the side sill inner and the surface portion of the floor cross member have substantially a same cross section orthogonal to the vehicle front-rear direction, and the side portion of the side sill inner and the surface portion of the floor cross member are positioned such that the ridge line sections on the upper side and the lower side of the vehicle body of the side sill inner and the upper end edge and the lower end edge of the surface portion of the floor cross member overlap respectively in a vehicle vertical direction, and in the ground-side cross member, the groove shape is linear, a cross section orthogonal to the vehicle width direction is substantially constant in the vehicle width direction, and an end is connected to the wall part of the side sill outer on the lower side of the vehicle body.

Moreover, the ground-side cross member may include: a continuous hat cross-sectional shape member having at least three consecutive hat cross sections in a cross section orthogonal to the vehicle width direction; an upper metal plate covering a top surface of the continuous hat cross-sectional shape member; and a lower metal plate covering a lower surface of the continuous hat cross-sectional shape member.

Moreover, the floor cross member may have the surface portion formed with end plates welded or bonded at both ends of the groove shape.

Moreover, a cross section of the floor cross member orthogonal to the vehicle width direction may be substantially constant in the vehicle width direction.

Moreover, the side sill and the floor cross member may be formed using a steel plate having a tensile strength greater than or equal to 980 MPa class, and the ground-side cross member may be formed using a steel plate having a tensile strength greater than or equal to 590 MPa class.

### Advantageous Effects of Invention

In the present invention, high collision absorbing energy can be obtained by sufficiently crushing a side sill by a reaction force of a load input to the side sill and transmitted to a floor cross member at the time of side collision. As a result, by reducing the transfer load on the battery pack at the time of the side collision and suppressing deformation of the battery pack, damage to the battery can be prevented to protect the battery, whereby safe battery electric vehicles can be manufactured. Furthermore, in the present invention, since the cross section of a side sill inner can be reduced, the weight of the vehicle body can be reduced without deteriorating the side impact performance.

### Brief Description of Drawings

FIG. 1 is a cross-sectional view illustrating the structure of an underbody structure of a battery electric vehicle according to an embodiment of the present invention.
FIG. 2 is a diagram for explaining the underbody structure of the battery electric vehicle according to the embodiment of the present invention ((a) conventional underbody structure and deformation behavior thereof at the time of side collision, and (b) enlarged view of a side sill of the underbody structure of the battery electric vehicle according to the present embodiment and a periphery thereof).
FIG. 3 is a diagram illustrating the structure of a ground-side cross member of the underbody structure of the battery electric vehicle according to the embodiment of the present invention ((a) Orthogonal cross-sectional view in vehicle width direction, (b) Orthogonal cross-sectional view in vehicle front-rear direction, and (c) enlarged view of orthogonal cross section in vehicle width direction).
FIG. 4 is a diagram for explaining side crashworthiness analysis in examples.
FIG. 5 is a diagram illustrating an underbody structure according to an invention example in the examples ((a) Perspective view from above vehicle body, and (b) Perspective view from below vehicle body).
FIG. 6 is a diagram illustrating a position in a vehicle front-rear direction (TL) where a pole collides with a side of a battery electric vehicle as a test target in the examples.
FIG. 7 is a diagram for explaining evaluation items of side impact performance in the examples ((a) Transfer load on battery pack and (b) Deformation amount of battery pack).
FIG. 8 is a diagram illustrating an underbody structure of a reference example to be compared with an underbody structure according to the invention example in the examples ((a) Perspective view from below vehicle body, and (b) Orthogonal cross-sectional view in vehicle front-rear direction).
FIG. 9 is a diagram illustrating a state of deformation in a side collision process of the vehicles including the underbody structures according to Invention Example 1 and Reference Example 1 in the examples ((a) Reference Example 1 and (b) Invention Example 1).
FIG. 10 is a diagram illustrating a state of deformation in a side collision process of vehicles including underbody structures according to Invention Example 2 and Reference Example 2 in the examples ((a) Reference Example 2 and (b) Invention Example 2).
FIG. 11 includes graphs illustrating results of evaluation items obtained in a side impact test for the underbody structures according to Invention Example 1 and Reference Example 1 in the examples ((a) Transfer load on battery pack and (b) Deformation amount of battery pack).
FIG. 12 includes graphs illustrating results of evaluation items obtained in a side impact test for the underbody structures according to Invention Example 2 and Reference Example 2 in the example ((a) Transfer load on battery pack and (b) Deformation amount of battery pack). Description of Embodiments

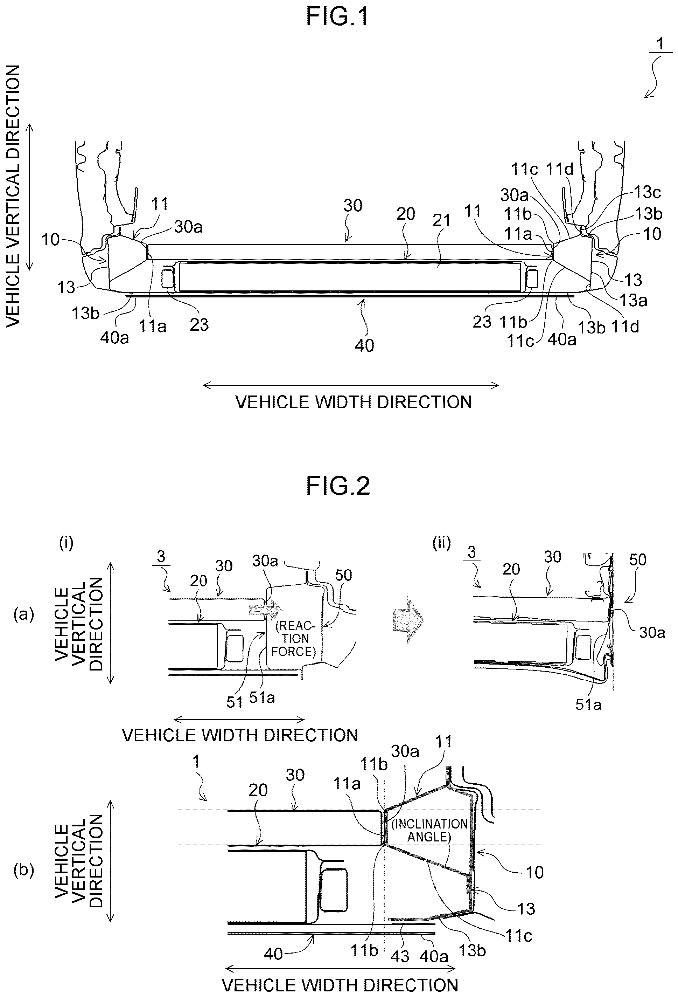

As illustrated in FIG. 1 as an example, an underbody structure 1(hereinafter, simply referred to as "underbody structure 1") of a battery electric vehicle according to an embodiment of the present invention includes side sills 10, a battery pack 20, a floor cross member 30, and a ground-side cross member 40. Hereinafter, the underbody structure 1 according to the present embodiment will be described with reference to FIGS. 1 and 2. In the present specification and the drawings, elements having the same functional structure are denoted by the same reference numerals, and redundant description is omitted.

The side sills 10 are a pair of left and right side sills disposed on the vehicle exterior side in the vehicle width direction and extending in the vehicle front-rear direction and include a side sill inner 11 and a side sill outer 13 as illustrated in FIG. 1.

The side sill inner 11 has a hat-shaped cross section that opens toward vehicle exterior side in the vehicle width direction. The side sill inner 11 includes a side portion 11a located on the vehicle interior side in the vehicle width direction and slope sections 11c that are each continuous to the vehicle exterior side from one of the upper end edge and the lower end edge of the side portion 11a via a ridge line section 11b and are inclined with respect to the vehicle horizontal direction. The side sill inner 11 further has flange portions 11d continuous from the respective slope sections 11c.

The side sill outer 13 has a groove shape that opens toward the vehicle interior side in the vehicle width direction. The side sill outer 13 further has a bottom part 13a located on the vehicle exterior side in the vehicle width direction and wall parts 13b that are bent toward the vehicle interior side and continuous from one of the upper end edge and the lower end edge of the bottom part 13a. In the present embodiment, the side sill outer 13 further includes a flange portion 13c continuous from the wall part 13b on the upper side of the vehicle body toward the upper side of the vehicle body. As will be described later, the wall part 13b on the lower side of the side sill outer 13 preferably has a shape extending to a position where the wall part 13b can be connected to an end portion 40a of the ground-side cross member 40 in the vehicle width direction in order to secure connection with the end portion 40a of the ground-side cross member 40.

In the side sill inner 11 and the side sill outer 13, the flange portion 11d on the upper side of the vehicle body of the side sill inner 11 and the flange portion 13c which is the upper end portion of the side sill outer 13 are joined in a state where the opening sides thereof face each other. Furthermore, the flange portion 11d of the side sill inner 11 on the lower side of the vehicle body is joined to the bottom part 13a of the side sill outer 13.

As illustrated in FIG. 1, the battery pack 20 is disposed between the pair of left and right side sills 10, and a battery cell 21 is mounted therein. In the present embodiment, the battery pack 20 is supported by a battery frame 23 disposed on the outer peripheral side in the vehicle width direction.

As illustrated in FIG. 1, the floor cross member 30 is installed on the top surface side of the battery pack 20 and extends in the vehicle width direction. Furthermore, the floor cross member 30 has a linear groove shape that is open toward the lower side of the vehicle body and closed with surface portions 30a provided at both ends in the vehicle width direction, and the surface portions 30a abut on the respective side portions 11a of the left and right side sill inners 11. The surface portions 30a of the floor cross member 30 may be in contact with the side portions 11a of the side sill inner 11 or may be joined by a bracket or the like.

A side portion 11a of a side sill inner 11 and a surface portion 30a of the floor cross member 30 have substantially the same cross section orthogonal to the vehicle front-rear direction and have substantially the same position in the vehicle vertical direction. Therefore, the ridge line sections 11b of the side sill inner 11 on the upper side and the lower side of the vehicle body are positioned so as to overlap the upper end edge and the lower end edge of the surface portion 30a of the floor cross member 30 in the vehicle vertical direction.

As illustrated in FIG. 1, the ground-side cross member 40 is installed on the lower side of the battery pack 20 and has a groove shape extending in the vehicle width direction.

In the ground-side cross member 40, the groove shape is linear and the cross section orthogonal to the vehicle width direction is substantially constant in the vehicle width direction, and an end portion 40a in the vehicle width direction is connected to a wall part 13b of a side sill outer 13 on the lower side of the vehicle body.

The connection method between the end portion 40a of the ground-side cross member 40 and the wall part 13b on the lower side of the side sill outer 13 is not particularly limited. For example, the top surface (upper metal plate 43 illustrated in FIG. 2(b)) of the end portion 40a on the vehicle interior side of the ground-side cross member 40 and the wall part 13b on the lower side of the side sill outer 13 may be preferably fastened with a fixing bolt or joined by welding (such as spot welding).

The reason deformation of the battery pack 20 can be suppressed and the battery pack 20 can be protected by reducing the transfer load on the battery pack 20 in the underbody structure 1 according to the present embodiment will be described below with reference to FIG. 2.

In a conventional underbody structure 3, as illustrated in FIGS. 2 (a) (i), the cross-sectional height of a side portion 51a of a side sill inner 51 is higher than the cross-sectional height of a surface portion 30a of a floor cross member 30, and the cross sections orthogonal to the vehicle front-rear direction are different. Furthermore, the surface portion 30a of the floor cross member is in contact with an upper portion of the side portion 51a of the side sill inner 51. As illustrated in FIGS. 2(a) (ii), in the conventional underbody structure 3, a side sill 50 cannot be sufficiently crushed by the reaction force from the floor cross member 30 at the time of side collision of the vehicle, and absorption efficiency of collision energy is low. Therefore, a load is transferred to the battery pack 20, and the battery pack 20 is deformed.

Meanwhile, in the underbody structure 1 of the present embodiment, as illustrated in FIG. 2(b), the cross sections of the side portion 11a of the side sill inner 11 and the surface portion 30a of the floor cross member 30 are substantially the same. Moreover, the ridge line sections 11b of the side sill inner 11 in the vehicle vertical direction and the upper end edge and the lower end edge of the surface portion 30a of the floor cross member 30 are positioned so as to overlap each other in the vehicle vertical direction.

As a result, the underbody structure 1 can transmit the collision load from the side sill outer 13 to the upper end edge and the lower end edge of the surface portion 30a of the floor cross member 30 via the slope sections 11c in the vehicle vertical direction of the side sill inner 11 at the time of side collision of the vehicle. Furthermore, in the underbody structure 1, the reaction force from the floor cross member 30 can be transmitted to the ridge line sections 11b of the side sill inner 11, and the side sill 10 can be sufficiently crushed, whereby the absorption efficiency of the collision energy can be improved. As a result, the transfer load on the battery pack 20 can be reduced, whereby deformation of the battery pack 20 can be suppressed.

In the underbody structure 1, the floor cross member 30 has a closed shape with the surface portions 30a provided at both ends of the groove shape, which are each in contact with a side portion 11a of a side sill inner 11. As a result, even in a case where a side sill 10 is deformed at the time of side collision and a load is transferred to an end of the floor cross member 30, it is possible to suppress a decrease in yield strength caused by such deformation as in which the groove shape opens.

Furthermore, in the underbody structure 1, since the ground-side cross member 40 is installed on the lower side of the battery pack 20, the load input to the side surface of the underbody structure 1 can be transmitted to the floor cross member 30 and the ground-side cross member 40 in a distributed manner. Accordingly, the protection performance of the battery pack 20 can be more effectively improved. In particular, by making the groove shape of the ground-side cross member 40 linear and making the cross section orthogonal to the vehicle width direction substantially constant in the vehicle width direction, the cross-sectional height of the side sill outer 13 can be maximized. As a result, collision absorption energy due to deformation of the side sill outer 13 can be increased. Furthermore, by making the groove shape of the ground-side cross member 40 linear and making the cross section orthogonal to the vehicle width direction substantially constant in the vehicle width direction, it is possible to achieve a structure in which the ground-side cross member 40 is unlikely to undergo folding deformation (buckling deformation) at the time of side collision, whereby the load transfer to the battery pack 20 can be reduced.

As described above, according to the underbody structure 1, the transfer load on the battery pack 20 can be reduced by sufficiently crushing the side sill 10 at the time of side collision to increase the collision absorption energy, whereby the deformation amount of the battery pack 20 can be suppressed.

Furthermore, in a side sill inner 11, the cross-sectional height of the side portion 11a is lower than that of the bottom part 13a of the side sill outer 13, and the flange portion 11d continuous from the side portion 11a via the slope section 11c on the lower side of the vehicle body is connected to the bottom part 13a of the side sill outer 13. As a result, the cross section of the side sill inner 11 can be reduced without reducing the collision absorption energy at the time of side collision, which contributes to weight reduction.

As described above, according to the underbody structure 1 of the battery electric vehicle of the present embodiment, it is possible to reduce the load transfer to the battery pack 20 at the time of the side collision and to suppress deformation of the battery pack 20. This makes it possible to manufacture safe battery electric vehicles that protect the battery even in the event of side collision. Furthermore, in the underbody structure 1 according to the present embodiment, the cross sections of the side sill inners 11 can be reduced, and the weight of the vehicle body can be reduced without deteriorating the side impact performance.

In the above description, the slope section 11c of the side sill inner 11 on the lower side of the vehicle body is connected to the bottom part 13a of the side sill outer 13; however, the present invention is not limited thereto, and the slope section 11c may be connected to the wall part 13b of the side sill outer 13 on the lower side of the vehicle body.

The inclination angle of the slope section 11c of the side sill inner 11 is not particularly limited, and may be set depending on the cross section of the side portion 11a, the arrangement of the side sill outer 13, or the connecting portion as appropriate. Meanwhile, with respect to the closed cross section formed by the side sill inner 11 and the side sill outer 13, it may be required to secure the frontal collision performance (frontal impact performance) of the vehicle or to store various harnesses. Therefore, the inclination angle of the slope section 11c (acute angle formed by the vehicle horizontal plane and the slope section 11c on the lower side of the vehicle body) is preferably greater than or equal to 20°. In addition, from the viewpoint of transmitting the reaction force from the floor cross member 30 received by the ridge line sections 11b of the side sill inner 11, the inclination angle of the slope section 11c on the lower side of the vehicle body of the side sill inner 11 is preferably less than or equal to 45°.

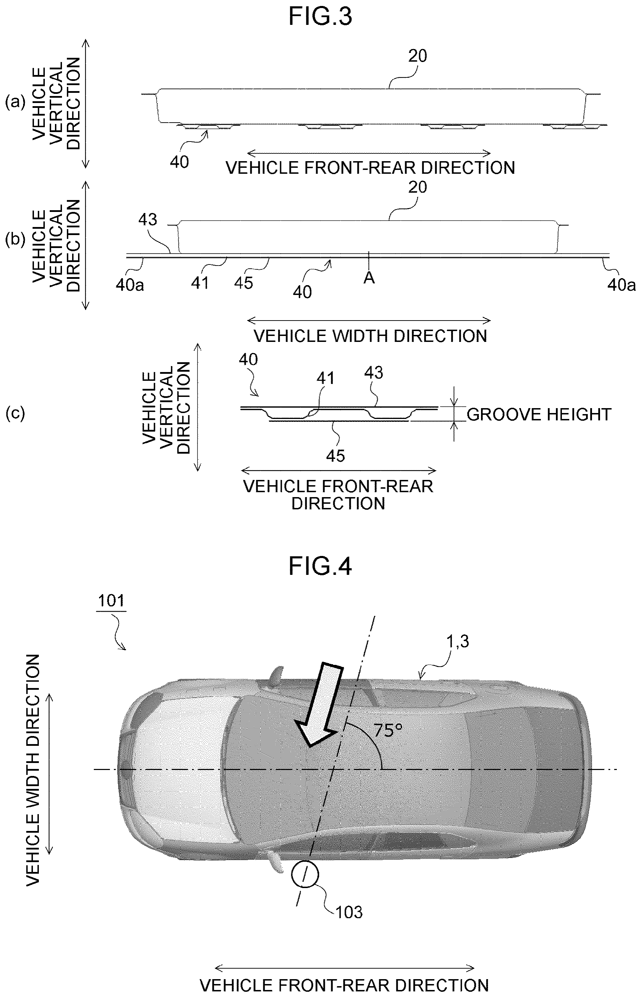

Furthermore, as a member having the groove shape extending in the vehicle width direction, the ground-side cross member 40 preferably includes a continuous hat cross-sectional shape member 41, an upper metal plate 43, and a lower metal plate 45 as illustrated in FIG. 3.

The continuous hat cross-sectional shape member 41 is a member formed in such a manner that three hat cross sections are continuous in a cross section orthogonal to the vehicle width direction. In the continuous hat cross-sectional shape member 41 illustrated in FIG. 3(c), two hat cross sections opened toward the upper side of the vehicle body and one hat cross section opened toward the lower side of the vehicle body between the two hat cross sections are continuously formed in the vehicle front-rear direction.

The upper metal plate 43 covers the top surface of the continuous hat cross-sectional shape member 41, and is provided so as to close the two hat cross-sectional openings opened to the upper side of the vehicle body in the continuous hat cross-sectional shape member 41. The upper metal plate 43 and the continuous hat cross-sectional shape member 41 are preferably connected by one side welding or with a bolt.

The lower metal plate 45 covers the lower surface of the continuous hat cross-sectional shape member 41 and is provided so as to connect two top portions (web portions) having a hat cross section opened to the upper side of the vehicle body. The lower metal plate 45 and the continuous hat cross-sectional shape member 41 are desirably connected by one side welding or with a bolt.

As described above, by adopting the structure in which the continuous hat cross-sectional shape member 41 is sandwiched between the upper metal plate 43 and the lower metal plate 45, the bending rigidity against the side collision load can be increased, and the ground-side cross member 40 can be structured to be unlikely to go under folding deformation (buckling deformation). As a result, it is possible to reduce the load transfer to the battery pack 20 at the time of side collision.

Although the continuous hat cross-sectional shape member 41 illustrated in FIG. 3(c) is formed such that three hat cross sections are continuous; however, in the present invention, the continuous hat cross-sectional shape member is only required to be formed such that at least three hat cross sections are continuous.

Furthermore, in the present invention, the continuous hat cross-sectional shape member may be disposed such that the two outer openings having a hat cross section face the lower side of the vehicle body and that the central opening having a hat cross section faces the upper side of the vehicle body. In this case, the upper metal plate is only required to be provided so as to connect top portions of the two outer hat cross sections of the continuous hat cross-sectional shape member to cover the top surface of the continuous hat cross-sectional shape member. Furthermore, the lower metal plate is only required to cover the lower surface of the continuous hat cross-sectional shape member by being provided so as to close the central opening having the hat cross section of the continuous hat cross-sectional shape member.

In the present invention, the floor cross member is only required to have a shape in which surface portions are provided at both ends and the groove shape is closed, and it is preferable that end plates are welded or bonded at both ends of the groove shape to form a closed shape. The welding of the end plate may be any one of spot welding, laser welding, or arc welding.

However, the floor cross member may be obtained by integrally forming, by drawing, a linear groove shape and a shape in which both ends are closed.

Furthermore, in the present invention, it is preferable that the floor cross member has a linear groove shape that is curved in the vehicle width direction with no undulation and that a cross section orthogonal to the vehicle width direction is substantially constant in the vehicle width direction. The fact that the cross section is substantially constant may mean that a change in the cross section in the vehicle width direction is less than or equal to 90% of the groove height at an end portion.

As described above, since the cross section of the floor cross member is linear without undulation curved in the vehicle width direction and is substantially constant in the vehicle width direction, it is possible to provide a structure in which the floor cross member is unlikely to go under folding deformation (buckling deformation) at the time of side collision. As a result, the side sill can be sufficiently crushed, and high collision absorption energy can be gained.

In the underbody structure according to the present invention, it is only required that the position and the number of floor cross members to be installed be set as appropriate such that the battery pack can be more effectively protected by receiving a collision load regardless of the position where the collision load is input to the side of the battery electric vehicle.

In addition, similarly to the floor cross member, a change in the cross section of the ground-side cross member in the vehicle width direction is preferably less than 1.2 times that for the central portion. Furthermore, the positions and the number of sets of right and left ground-side cross members may also be set as appropriate similarly to the floor cross member. Preferably, the ground-side cross member is installed at a position overlapping the floor cross member in the vehicle front-rear direction. As a result, the collision load can be efficiently dispersed to the floor cross member and the ground-side cross member, whereby the protection performance of the battery pack can be further improved.

The height of the surface portion of the floor cross member in contact with the side portion of the side sill inner is preferably determined such that the upper end edge of the surface portion of the floor cross member overlaps the range of the ridge line section on the upper end portion side of the side portion of the side sill inner (a range in the vehicle vertical direction between an R tangent end on the side portion side and an R tangent end on the slope section side in bending R of the ridge line section), and the lower end edge of the surface portion of the floor cross member overlaps the range of the ridge line section on the lower end portion side of the side portion of the side sill inner. In addition, the height of the surface portion of the floor cross member is preferably less than or equal to 100 mm, and more preferably 40 to 60 mm in relation to the cabin space.

In the present invention, the side sills and the floor cross member are preferably formed using a steel plate having a tensile strength greater than or equal to 980 MPa. Examples of the steel plate having the tensile strength greater than or equal to 980 MPa class include steel plates of 980 MPa class, 1180 MPa class, 1370 MPa class, 1470 MPa class, 1760 MPa class, and 1960 MPa class.

The ground-side cross member is preferably formed using a steel plate having a tensile strength greater than or equal to 590 MPa. After impact on a side sill outer 13 by side collision, the end portion 40a of the ground-side cross member 40 directly transmits the collision load input to the vehicle body to the ground-side cross member 40 (see FIG. 1). However, the ground-side cross member 40 is more prone to folding deformation than the floor cross member 30 is, and when fracture occurs in the ground-side cross member 40 due to the folding deformation, the collision energy absorbing performance is significantly deteriorated. For this reason, the ground-side cross member is preferably formed using a steel plate having ductility higher than that of steel plates used for the side sills and the floor cross member, and is preferably formed using a steel plate having a tensile strength equivalent to that of the floor cross member or a steel plate of a 590 MPa class or higher having a tensile strength lower than that of the floor cross member and having ductility higher than that of the floor cross member.

By producing the side sills, the cross member, and the ground-side cross member using steel plates having these tensile strengths, the collision energy can be efficiently absorbed by sufficiently crushing the upper portion and the lower portion of a side sill at the time of side collision.

### [Examples]

Since a specific analysis for verifying the operation and effect of the underbody structure according to the present invention has been performed, the results thereof will be described below.

In the present example, as illustrated in FIG. 3, a crashworthiness analysis of a side pole impact test was performed in which a side of a vehicle 101, including the underbody structure 1 illustrated in FIG. 1 in the above-described embodiment, is caused to collide with a pole 103 from the vehicle exterior side in the vehicle width direction (Invention Example).

As described in the embodiment, the underbody structure 1 includes the side sills 10, the battery pack 20, the floor cross member 30, and the ground-side cross member 40.

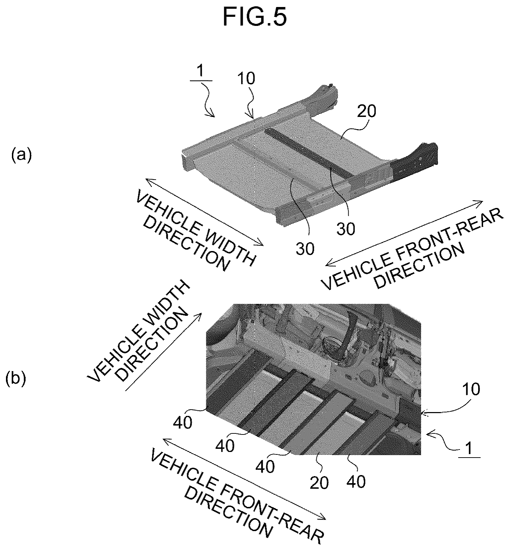

The floor cross member 30 is provided for fastening a front seat (not illustrated), and as illustrated in FIG. 5(a), two floor cross members were provided at an interval in the vehicle front-rear direction. Each of the two floor cross members 30 has a closed shape with surface portions 30a provided at both ends of the groove shape extending in the vehicle width direction, and is brought into contact with side surfaces of the left and right side sills 10 (side portions 11a of the side sill inners 11).

As illustrated in FIG. 5(b), four ground-side cross members 40 are installed at intervals in the vehicle front-rear direction on the lower side of the battery pack.

As illustrated in FIG. 3 described above, each of the ground-side cross members 40 includes a continuous hat cross-sectional shape member 41, an upper metal plate 43, and a lower metal plate 45. As illustrated in FIGS. 3(b) and 3(c), in each of the ground-side cross members 40, the groove shape is linear, the cross section orthogonal to the vehicle width direction is substantially constant in the vehicle width direction, and the groove height is set to 12.6 mm.

In the underbody structure 1 according to the present example, the side sills 10 and the floor cross members 30 are formed using a steel plate having a tensile strength of 980 MPa class, and the ground-side cross members 40 are formed using a steel plate having a tensile strength of 980 MPa class.

In the present example, a crashworthiness analysis of a side pole impact test in which a side of the vehicle 101, accelerated to 32 km/h, is caused to collide with the pole 103 at an impact angle of 75° was performed (FIG. 4).

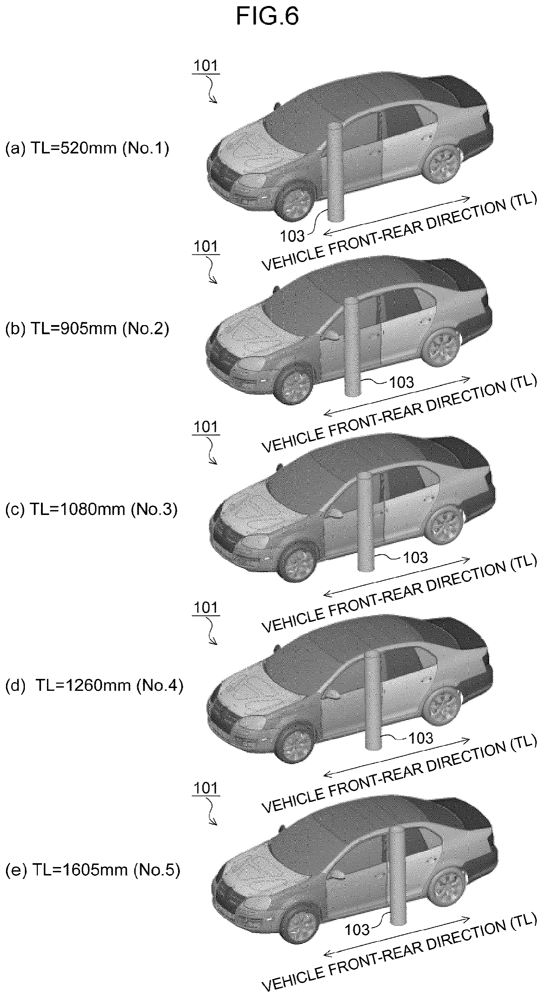

In a battery electric vehicle, there is a strict requirement of anywhere requirements, which enables protection of the battery pack 20 regardless of the collision position of the pole 103 on a side of the vehicle 101. Therefore, in the present example, as illustrated in FIG. 6, five positions of No. 1 to No. 5 in the vehicle front-rear direction (TL) were set as collision positions of the pole 103 (No. 1: TL = 520 mm, No. 2: TL = 905 mm, No. 3: TL = 1080 mm, No. 4: TL = 1260 mm, and No. 5: TL = 1605 mm). Then, a crashworthiness analysis of pole side collision was performed for each of the collision positions of No. 1 to No. 5, and the load transfer to the battery pack 20 side (transfer load on the battery pack) and the deformation amount of the battery pack 20 (deformation amount of the battery pack) were evaluated.

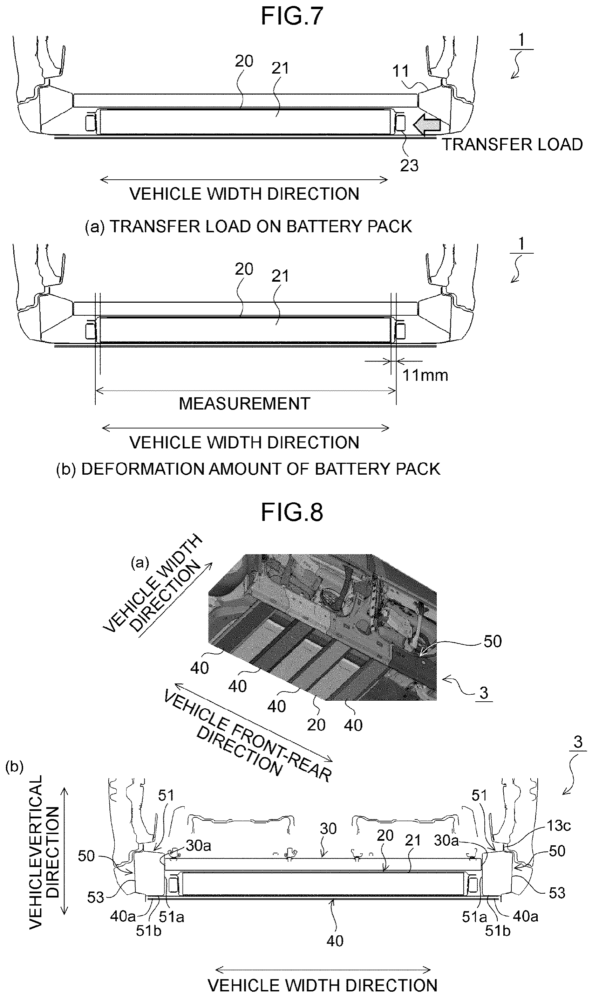

As illustrated in FIG. 7(a), the transfer load on the battery pack was defined as the reaction force (contact reaction force) generated in the battery frame 23 by a contact with the side sill inner 11 in the collision process.

The batteries mounted on battery electric vehicles and the like are required to conform to the UN regulation "UN ECE R100-0.2. Part II.", and an impact test (collision test) is defined as a test item related to safety evaluation of batteries at the time of vehicle collision. In this impact test, a test target device (battery pack) is crushed with a force in a range of 100 kN to 105 kN in a start period of less than 3 minutes and a holding period in a range of 100 ms to 10 s, and presence or absence of signs of battery crushing, electrolyte leakage, fire, or explosion is evaluated (see URL: https://www.mlit.go.jp/jidosha/un/UN_R100.pdf [searched on June 21, 2023]). In the present example, the target value of the transfer load on the battery pack was set to less than or equal to 105 kN, which is a load applied to a battery in an impact test of the UN Regulation "UN ECE R100-0.2. Part. II".

Meanwhile, with respect to the deformation amount of the battery pack, as illustrated in FIG. 7(b), the lengths in the vehicle width direction of the battery pack 20 before and after the deformation were measured at twelve spots in the vehicle front-rear direction, and the difference between before and after the deformation was obtained. The minimum distance between the inner surface of the battery pack 20 and the battery cell 21 before the deformation was 11 mm in consideration of the plate thickness of the battery pack 20. Therefore, in the present example, as a condition that the battery pack 20 and the battery cell 21 do not come into contact with each other at the time of pole side collision, a deformation amount of the battery pack of less than 10 mm was set as a target.

In the present example, Invention Example 1 and Invention Example 2 in which the width of the battery pack 20 is different were set. In Invention Example 1, the battery pack 20 has a reference width (the distance between the battery pack 20 and a side sill inner 11 in the vehicle width direction is set to 90 mm.). Meanwhile, in Invention Example 2, the battery pack 20 is wider by 60 mm than the reference width (the distance between the battery pack 20 and a side sill inner 11 in the vehicle width direction is set to 60 mm).

Furthermore, in the present example, as illustrated in FIG. 8, an underbody structure 3 including side sill inners 51 having side portions 51a having a cross section of which height is much higher than that of surface portions 30a of a floor cross member 30 was used as a reference example. In the underbody structure 3, a side sill 50 is formed by joining a side sill outer 53 having a hat cross section and a side sill inner 51, and a battery pack 20, the floor cross member 30, and a ground-side cross member 40 are the same as those of the underbody structure 1 of the Invention Examples. Furthermore, surface portions 30a of the floor cross member 30 are brought into contact with upper portions of the side portions 51a of the side sill inner 51, and both end portions 40a of the ground-side cross member 40 in the vehicle width direction are connected to wall parts 51b on the lower side of the side sill inners 51.

Comparing the side sill inner 51 of the reference example (FIG. 8) with the side sill inners 11 of the Invention Examples (FIG. 1), the side sill inners 11 of the Invention Examples have a much smaller cross section. Therefore, the underbody structure 1 according to the Invention Examples achieves a weight reduction of 5.1 kg as compared with the underbody structure 3 of the reference example.

Also for the reference example, the crashworthiness analysis of the pole side collision was performed similarly to the underbody structure 1 of Invention Examples, and an underbody structure 3 having a battery pack 20 as a reference width was set as Reference Example 1, and an underbody structure 3 having the width of a battery pack 20 wider than the reference width by 60 mm was set as Reference Example 2.

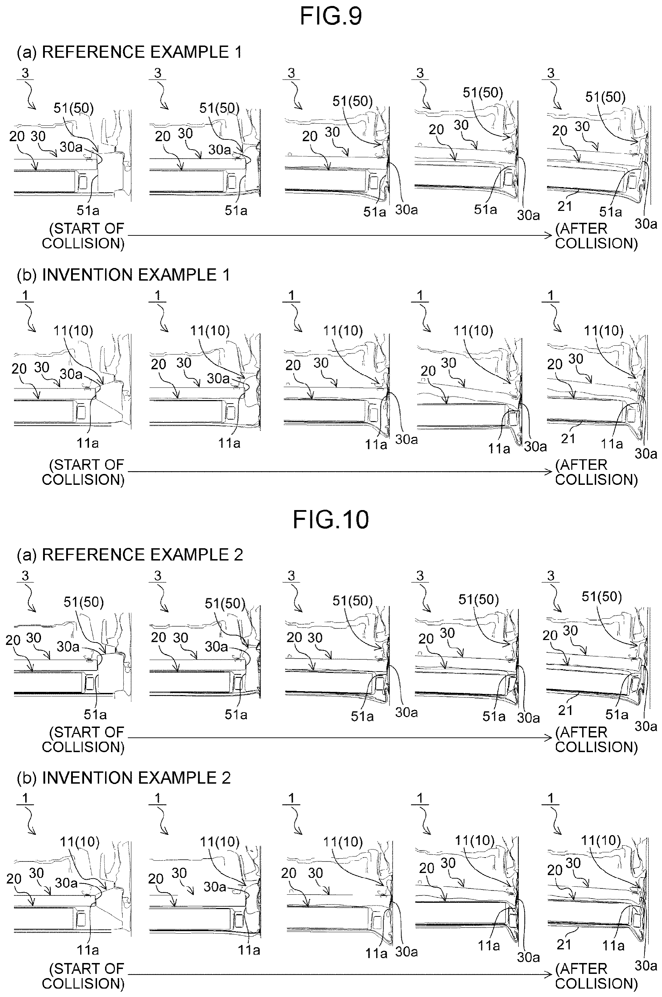

FIG. 9 illustrates a deformation behavior in a pole side collision process in which the pole 103 is caused to collide with the side of the vehicle 101 including the underbody structure 1 (Invention Example 1) and the underbody structure 3 (Reference Example 1) which have the battery pack 20 as the reference width. The result illustrated in FIG. 9 is a result of a case where the pole is caused to collide at the position in the vehicle front-rear direction of TL=905 mm (FIG. 6(b)).

In Reference Example 1, as illustrated in FIG. 9(a), since the surface portion 30a of the floor cross member 30 abuts on an upper portion of the side portion 51a of the side sill inner 51, there is a spot not crushed in a lower portion of the side sill inner 51, which suggests that the collision energy is not sufficiently absorbed.

On the other hand, in Invention Example 1, as illustrated in FIG. 9(b), the side sill 10 is completely crushed, which shows that the collision energy is sufficiently absorbed.

FIG. 10 illustrates a deformation behavior in a pole side collision process in which the pole 103 is caused to collide with the side of the vehicle 101 including the underbody structure 1 (Invention Example 2) and the underbody structure 3 (Reference Example 2) having the width of the battery pack 20 wider than the reference width by 60 mm. The result illustrated in FIG. 10 is a result of a case where the pole 103 is caused to collide at the position in the vehicle front-rear direction of TL=905 mm (FIG. 6(b)).

Even in the case where the width of the battery pack 20 is made wider than the reference width by 60 mm, in the underbody structure 3 according to Reference Example 2, there is a spot not crushed in a lower portion of the side sill inner 51, which suggests that the collision energy is not sufficiently absorbed. On the other hand, in the underbody structure 1 according to Invention Example 2, the collision energy is sufficiently absorbed by completely crushing the side sill 10.

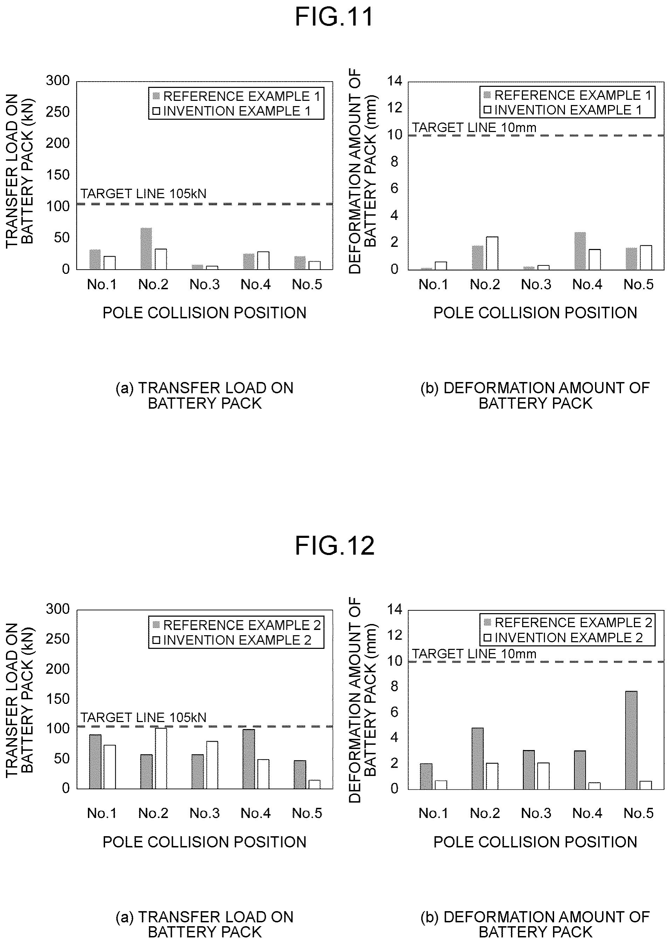

FIG. 11 illustrates evaluation results of the transfer load on the battery pack and the deformation amount of the battery pack obtained for each of the positions in the vehicle front-rear direction where the pole 103 collides in the case where the width of the battery pack 20 is set as the reference width. The transfer load on the battery pack in Invention Example 1 was equivalent to or lower than that in Reference Example 1 at any of the collision positions, which was significantly lower than the target of 105 kN.

Similarly, the deformation amount of the battery pack in Invention Example 1 was also equivalent to or smaller than that in Reference Example 1 and was less than the target of 10 mm at any of the collision positions.

FIG. 12 illustrates evaluation results of the transfer load on the battery pack and the deformation amount of the battery pack obtained for each of the positions in the vehicle front-rear direction where the pole 103 collides in the case where the width of the battery pack 20 is made wider than the reference width by 60 mm. The transfer load on the battery pack in Invention Example 2 was equivalent to or lower than that in Reference Example 2 at any of the collision positions, which was lower than or equal to the target of 105 kN.

Similarly, the deformation amount of the battery pack in Invention Example 2 was also equivalent to or smaller than that in Reference Example 2 and was less than the target of 10 mm at any of the collision positions.

Although the anywhere requirements in pole side collisions of battery electric vehicles are very difficult conditions, it has been demonstrated that the target deformation amount of the battery pack can be achieved regardless of the pole collision position and that the battery can be protected according to the underbody structure 1 of the present invention. Furthermore, it has been shown that the underbody structure 1 according to the present invention can reduce the weight of the vehicle body without deteriorating the side impact performance.

### Industrial Applicability

According to the present invention, it is possible to provide an underbody structure of a battery electric vehicle capable of reducing a transfer load on a battery pack and suppressing deformation at the time of side collision of the battery electric vehicle without reducing weight efficiency.

### Reference Signs List

- 1: UNDERBODY STRUCTURE
- 3: UNDERBODY STRUCTURE
- 10: SIDE SILL
- 11: SIDE SILL INNER
- 11a: SIDE PORTION
- 11b: RIDGE LINE SECTION
- 11c: SLOPE SECTION
- 11d: FLANGE PORTION
- 13: SIDE SILL OUTER
- 13a: BOTTOM PART
- 13b: WALL PART
- 13c: FLANGE PORTION
- 20: BATTERY PACK
- 20a: END PORTION
- 21: BATTERY CELL
- 23: BATTERY FRAME
- 30: FLOOR CROSS MEMBER
- 30a: SURFACE PORTION
- 40: GROUND-SIDE CROSS MEMBER
- 40a: END PORTION
- 41: CONTINUOUS HAT CROSS-SECTIONAL SHAPE MEMBER
- 41a: TOP PORTION
- 43: UPPER METAL PLATE
- 45: LOWER METAL PLATE
- 50: SIDE SILL
- 51: SIDE SILL INNER
- 51a: SIDE PORTION
- 51b: WALL PART
- 53: SIDE SILL OUTER
- 101: VEHICLE
- 103: POLE

## Claims

1. An underbody structure for a battery electric vehicle, the underbody structure comprising:
a pair of left and right side sills disposed on the vehicle outer side in the vehicle width direction and extending in a vehicle front-rear direction;
a battery pack disposed between the pair of left and right side sills;
a floor cross member installed on a top surface side of the battery pack and extending in a vehicle width direction; and
a ground-side cross member installed on a lower side of the battery pack and having a groove shape extending in a vehicle width direction, wherein
the side sills each include:
a side sill inner having a hat cross section opened toward the vehicle exterior side in the vehicle width direction, the side sill inner includes
a side portion positioned on a vehicle interior side in the vehicle width direction,
slope sections each continuous from one of an upper end edge and a lower end edge of the side portion to a vehicle exterior side via a ridge line section and inclined with respect to a vehicle horizontal direction, and
a flange portion continuous from each of the slope sections; and
a side sill outer having a groove shape opened toward the vehicle interior side in the vehicle width direction, the side sill outer includes
a bottom part positioned on the vehicle exterior side in the vehicle width direction, and
wall parts each bent from one of an upper end edge and a lower end edge of the bottom part toward the vehicle interior side and continuous,
the flange portion of the side sill inner on an upper side of a vehicle body and an upper end portion of the side sill outer are joined to each other in a state in which an opening side of the side sill inner and an opening side of the side sill outer face each other, and the flange portion of the side sill inner on a lower side of the vehicle body and the bottom part of the side sill outer or the wall part of the side sill outer on the lower side of the vehicle body are joined to each other in the state in which the opening side of the side sill inner and the opening side of the side sill outer face each other,
the floor cross member has a linear groove shape opened toward the lower side of the vehicle body and closed with surface portions provided at both ends in the vehicle width direction, each of the surface portions abutting on the side portion of one of the left and right side sill inners,
the side portion of the side sill inner and the surface portion of the floor cross member have substantially a same cross section orthogonal to the vehicle front-rear direction, and the side portion of the side sill inner and the surface portion of the floor cross member are positioned such that the ridge line sections on the upper side and the lower side of the vehicle body of the side sill inner and the upper end edge and the lower end edge of the surface portion of the floor cross member overlap respectively in a vehicle vertical direction, and
in the ground-side cross member, the groove shape is linear, a cross section orthogonal to the vehicle width direction is substantially constant in the vehicle width direction, and an end is connected to the wall part of the side sill outer on the lower side of the vehicle body.

2. The underbody structure for a battery electric vehicle according to claim 1, wherein
the ground-side cross member includes:
a continuous hat cross-sectional shape member having at least three consecutive hat cross sections in a cross section orthogonal to the vehicle width direction;
an upper metal plate covering a top surface of the continuous hat cross-sectional shape member; and
a lower metal plate covering a lower surface of the continuous hat cross-sectional shape member.

3. The underbody structure for a battery electric vehicle according to claim 1 or 2, wherein the floor cross member has the surface portion formed with end plates welded or bonded at both ends of the groove shape.

4. The underbody structure of a battery electric vehicle according to claim 1 or 2, wherein a cross section of the floor cross member orthogonal to the vehicle width direction is substantially constant in the vehicle width direction.

5. The underbody structure for a battery electric vehicle according to claim 1 or 2, wherein
the side sill and the floor cross member are formed using a steel plate having a tensile strength greater than or equal to 980 MPa class, and
the ground-side cross member is formed using a steel plate having a tensile strength greater than or equal to 590 MPa class.
